# EUROPEAN PATENT APPLICATION

(11) **EP 4 768 282 A1**
(43) Date of publication of application: **01.07.2026**
(21) Application number: 25220953.1
(22) Date of filing: 04.12.2025
(51) Int. Cl.: B60C 19/00, G06K 19/077, H01Q 1/22, B60C 5/14, B60C 15/06

(54) **PNEUMATIC TIRE**

(30) Priority: 26.12.2024 JP 2024231309
(71) Applicant: Sumitomo Rubber Industries, Ltd., Kobe-shi, Hyogo 651-0072 (JP)
(72) Inventor: OKAGAWA, Hiroshi, Kobe-shi, 651-0072 (JP); MAEDA, Yohei, Kobe-shi, 651-0072 (JP); KIMOTO, Ryuhei, Kobe-shi, 651-0072 (JP)
(74) Representative: Manitz Finsterwald Patent- und Rechtsanwaltspartnerschaft mbB

(57) **Abstract**

A pneumatic tire 1 includes at least one electronic component 21. The electronic component 21 is covered with a cover rubber having an electrical resistivity of 1.0×10¹⁰ Ω·cm or more. When a height Ha of a bead apex rubber 8 in a tire radial direction from an outer surface 5a of a bead core 5 is less than 25 mm, the electronic component 21 is placed in a region between 5 mm or more and 25 mm or less from the outer surface 5a of the bead core 5 to an outer side in the tire radial direction. When the height Ha of the bead apex rubber 8 is 25 mm or more, the electronic component 21 is placed in a region A2 between 5 mm or more from the outer surface 5a of the bead core 5 to the outer side in the tire radial direction and an outer end 8e in the tire radial direction of the bead apex rubber 8 or therebelow.

## Description

### BACKGROUND OF THE INVENTION

### Field of the Invention

The present invention relates to a pneumatic tire.

### Background Art

International Publication No. WO2019/054227 describes a pneumatic tire in which an electronic component capable of communicating with the outside such as an RFID (Radio Frequency Identification) tag is provided. In International Publication No. WO2019/054227, the electronic component is provided outward of a carcass in the tire axial direction and the content of silica of a rubber member placed outward of the electronic component is specified. Accordingly, the tire of International Publication No. WO2019/054227 is considered to ensure sufficient reading performance of the electronic component and suppress a decrease in the durability of the tire.

In recent years, in the pneumatic tire as described above, it has been desired to enhance the communication performance (reading performance) of the electronic component and the durability of the pneumatic tire and the electronic component.

The present invention has been made in view of the above circumstances, and a main object of the present invention is to provide a pneumatic tire that can enhance the communication performance of an electronic component and the durability of the pneumatic tire and the electronic component.

### SUMMARY OF THE INVENTION

The present invention is directed to a pneumatic tire including a pair of bead portions and at least one electronic component, wherein: the electronic component is covered with a cover rubber having an electrical resistivity of 1.0×10¹⁰ Ω·cm or more; each of the pair of bead portions is provided with a bead core and a bead apex rubber extending outward in a tire radial direction from an outer surface in the tire radial direction of the bead core; when a height of the bead apex rubber in the tire radial direction from the outer surface of the bead core is less than 25 mm, the electronic component is placed in a region between 5 mm or more and 25 mm or less from the outer surface of the bead core to an outer side in the tire radial direction; and when the height of the bead apex rubber is 25 mm or more, the electronic component is placed in a region between 5 mm or more from the outer surface of the bead core to the outer side in the tire radial direction and an outer end in the tire radial direction of the bead apex rubber or therebelow.

As a result of adopting the above-described configuration, the pneumatic tire of the present invention can enhance the communication performance of the electronic component and the durability of the pneumatic tire and the electronic component.

### BRIEF DESCRIPTION OF THE DRAWINGS

FIG. 1 is a tire meridional cross-sectional view of a pneumatic tire of one embodiment of the present invention;
FIG. 2 is an enlarged perspective view of an electronic component;
FIG. 3 is a tire meridional cross-sectional view of the pneumatic tire in which the height of a bead apex rubber is less than 25 mm;
FIG. 4 is an enlarged cross-sectional view of a carcass, an inner liner layer, and the electronic component;
FIG. 5 is an enlarged cross-sectional view of a bead portion showing first elements;
FIG. 6 is a cross-sectional view of the electronic component as seen in the direction of a tire rotation axis;
FIG. 7 is a tire meridional cross-sectional view of a right half of a pneumatic tire of another embodiment; and
FIG. 8 is a front view of a reinforcing rubber layer formed in the pneumatic tire, as seen in the direction of the tire rotation axis.

### DETAILED DESCRIPTION

Hereinafter, embodiments of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout each embodiment, and the redundant description thereof is omitted.

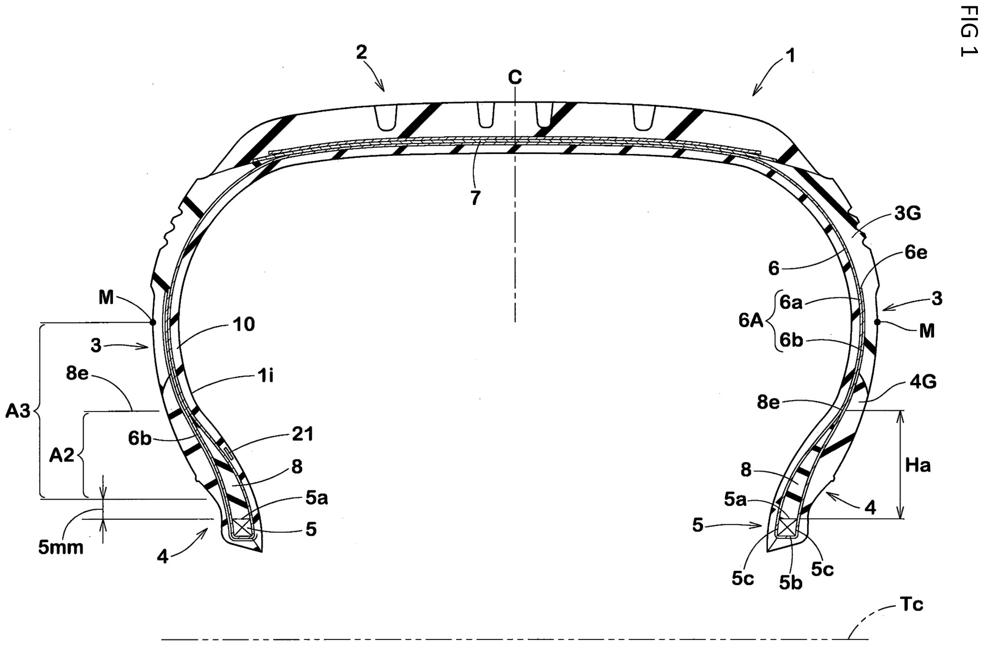

FIG. 1 is a tire meridional cross-sectional view of a pneumatic tire 1 (hereinafter sometimes referred to simply as "tire"), showing one embodiment of the present invention, including a tire rotation axis Tc in a standardized state. The present invention is suitably used, for example, as a tire for a passenger car. The present invention may be used for tires for a heavy-duty vehicle or a motorcycle.

In the case of a pneumatic tire for which various standards are defined, the "standardized state" is a state where the tire is fitted on a standardized rim and inflated to a standardized internal pressure and no load is applied to the tire. In the case of a tire for which various standards are not defined, the standardized state means a standard use state, corresponding to the purpose of use of the tire, where no load is applied to the tire. In the present specification, unless otherwise specified, dimensions and the like of components of the tire are values measured in the standardized state.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 of the present embodiment includes a pair of bead portions 4 and at least one electronic component 21. In addition, the tire 1 includes a pair of sidewall portions 3 respectively connected to the pair of bead portions 4, and a tread portion 2 connected to each of the pair of sidewall portions 3.

Each of the pair of bead portions 4 is provided with a bead core 5 and a bead apex rubber 8 extending outward in the tire radial direction from an outer surface 5a in the tire radial direction of the bead core 5.

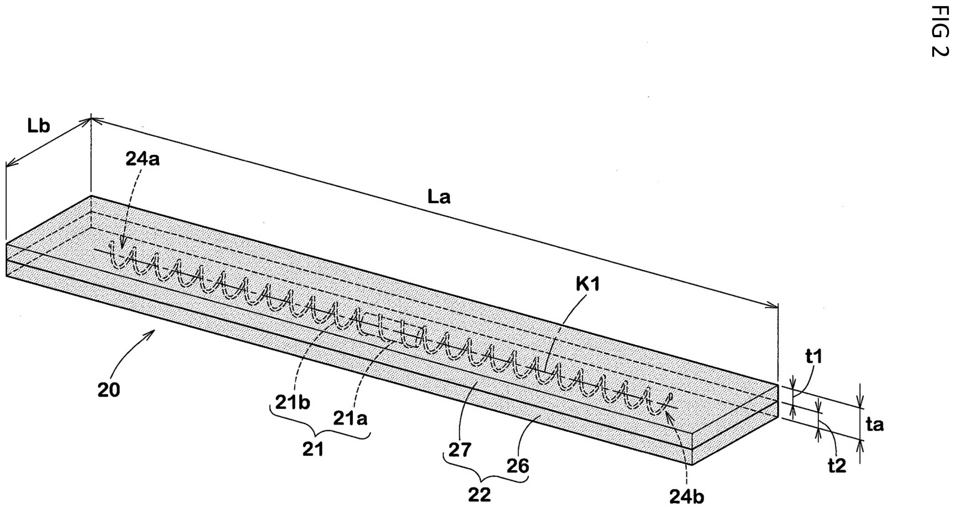

FIG. 2 is an enlarged perspective view of the electronic component 21. As shown in FIG. 2, the electronic component 21 is covered with a cover rubber 22. The cover rubber 22 has an electrical resistivity of 1.0×10¹⁰ Ω·cm or more. Such a cover rubber 22 can suppress noise, radio interference, and the like generated in the electronic component 21, thereby improving communication performance. In addition, the cover rubber 22 can suppress contact between the electronic component 21 and another tire component and thus can improve the durability of the electronic component 21. In the present specification, a member composed of the electronic component 21 and the cover rubber 22 is an electronic module 20.

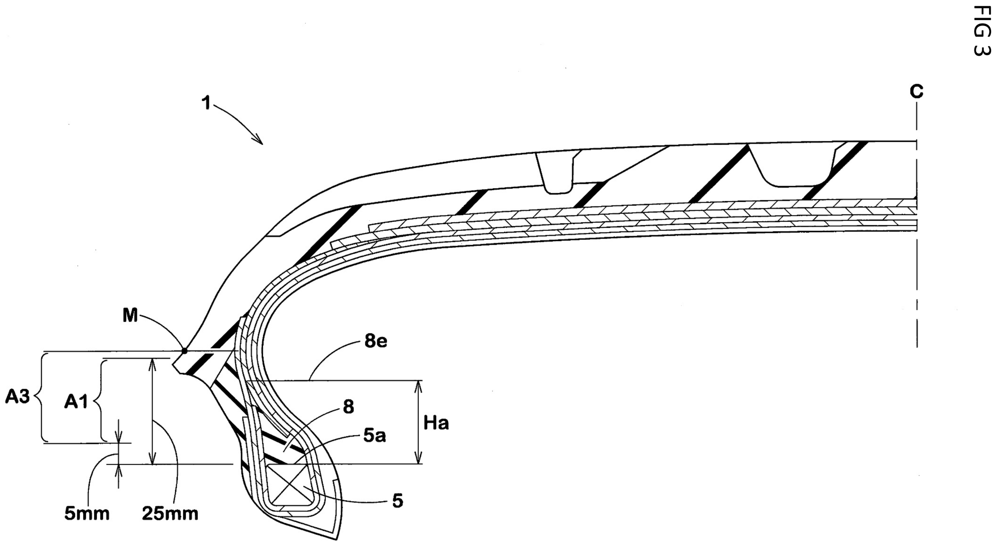

The present invention has been made based on the fact that a region where shear strain in the tire circumferential direction is small is different between the case where a height (shown in FIGS. 1 and 3) Ha of the bead apex rubber 8 in the tire radial direction from the outer surface 5a (outer end in the tire radial direction) of the bead core 5 is larger than 25 mm and the case where the height Ha is smaller than 25 mm. FIG. 3 is a tire meridional cross-sectional view of a left half of the tire 1 in which the height Ha of the bead apex rubber 8 is less than 25 mm. As shown in FIG. 3, in the case where the height Ha of the bead apex rubber 8 is less than 25 mm, the shear strain in the tire circumferential direction generated in the electronic component 21 can be reduced by placing the electronic component 21 in a region A1 between 5 mm or more and 25 mm or less from the outer surface 5a of the bead core 5 to the outer side in the tire radial direction. FIG. 1 is a tire meridional cross-sectional view of the tire 1 in which the height Ha of the bead apex rubber 8 is 25 mm or more. As shown in FIG. 1, in the case where the height Ha of the bead apex rubber 8 is 25 mm or more, the electronic component 21 is placed in a region A2 between 5 mm or more from the outer surface 5a of the bead core 5 to the outer side in the tire radial direction and an outer end 8e in the tire radial direction of the bead apex rubber 8 or therebelow. Accordingly, the shear strain in the tire circumferential direction generated in the electronic component 21 can be reduced. Therefore, damage of the tire 1 starting from the electronic component 21 and damage of the electronic component 21 itself can be suppressed, and thus the durability of the electronic component 21 and the tire 1 can be improved. Moreover, if the electronic component 21 is present at a position that is excessively close to the bead core 5, the reading performance of the electronic component 21 is deteriorated due to the influence of the bead core 5. In particular, in the case where a bead wire (not shown) of the bead core 5 is made of a metal such as steel, the reading performance of the electronic component 21 is deteriorated. Therefore, the reading performance of the electronic component 21 can be maintained high by not placing the electronic component 21 at a position that is away from the outer surface 5a to the outer side in the tire radial direction by less than 5 mm.

As shown representatively in FIG. 1, the tire 1 further includes a toroidal carcass 6 extending between the bead cores 5 of the pair of bead portions 4 and a toroidal inner liner layer 10 extending between the pair of bead portions 4 on the inner side of the carcass 6. The tire 1 also includes sidewall rubbers 3G forming the sidewall portions 3 and clinch rubbers 4G forming the bead portions 4 and having a well-known structure. The sidewall rubbers 3G and the clinch rubbers 4G are each configured with a well-known structure.

The carcass 6 of the present embodiment is composed of, for example, one carcass ply 6A. The carcass ply 6A includes, for example, a body portion 6a and turned-up portions 6b. The body portion 6a extends between the two bead portions 4, for example. Each turned-up portion 6b is connected to the body portion 6a and turned up around the bead core 5 from the inner side to the outer side in the tire axial direction, for example. An outer end 6e in the tire radial direction of the turned-up portion 6b is located outward of a tire maximum width position M in the tire radial direction in the present embodiment. The outer end 6e in the tire radial direction of the turned-up portion 6b may be located inward of the tire maximum width position M in the tire radial direction. The tire maximum width position M is specified at the outermost point in the tire axial direction of the carcass ply 6A. In the tread portion 2, a belt layer 7 having a well-known structure is provided outward of the carcass 6 in the tire radial direction.

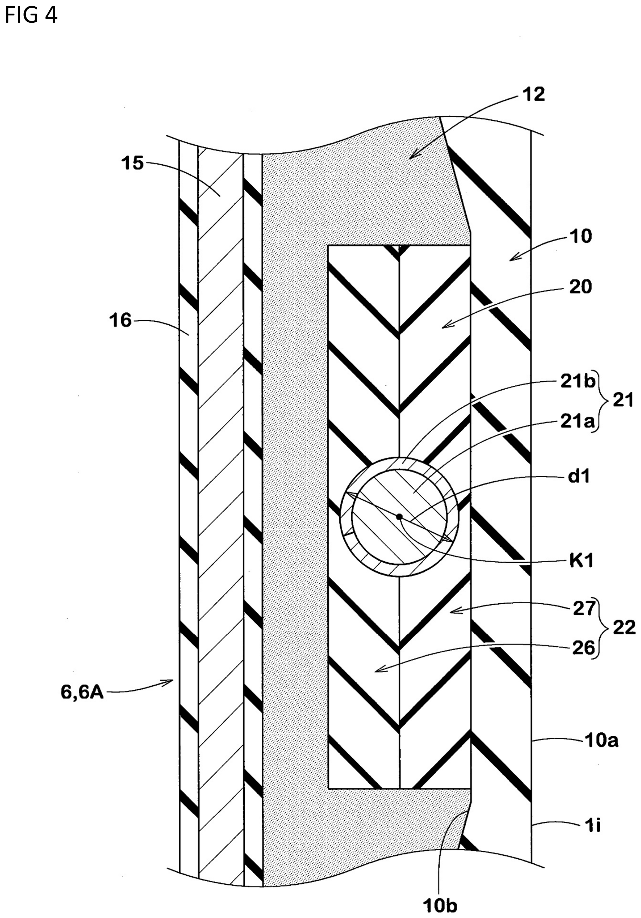

FIG. 4 is an enlarged view schematically showing a cross-section of the vicinity of the electronic component 21 shown in FIG. 1. In FIG. 4, the carcass ply 6A, the inner liner layer 10, and the electronic component 21 are shown. As shown in FIG. 4, the carcass ply 6A includes a plurality of carcass cords 15 (in FIG. 4, one carcass cord 15 is shown) and a topping rubber layer 16 covering the plurality of carcass cords 15.

As each carcass cord 15, for example, an organic fiber cord made of aramid, rayon, or the like is used. The carcass cords 15 are preferably arranged, for example, at an angle (not shown) of 70 to 90° with respect to a tire equator C.

Examples of the rubber component of the topping rubber layer 16 include isoprene-based rubbers, and diene-based rubbers such as styrene-butadiene rubber (SBR), butadiene rubber (BR), acrylonitrile butadiene rubber (NBR), chloroprene rubber (CR), isobutylene-isoprene-rubber (IIR), and styrene-isoprene-butadiene copolymer rubber (SIBR). These rubbers may be used individually, or two or more of these rubbers may be used in combination. Among them, isoprene-based rubbers, SBR, and BR are preferable.

The inner liner layer 10 is placed inward of the carcass 6 and forms a tire inner cavity surface 1i. In the present embodiment, the inner liner layer 10 has an inwardly facing surface 10a forming the tire inner cavity surface 1i, and an outwardly facing surface 10b opposite to the inwardly facing surface 10a and facing the carcass ply 6A side. The inner liner layer 10 has a very low air permeability and can maintain the tire internal pressure. The inner liner layer 10 contains, for example, 80% by mass or more of a butyl-based rubber such as isobutylene-isoprene-rubber or halogenated isobutylene-isoprene-rubber. As described above, a layer having a well-known configuration is used as the inner liner layer 10.

The tire 1 of the present embodiment includes an adhesive rubber layer 12 placed outward of the inner liner layer 10 in the tire axial direction. The adhesive rubber layer 12 is placed so as to be sandwiched between the inner liner layer 10 and the carcass 6 (carcass ply 6A), for example. In the present embodiment, the adhesive rubber layer 12 extends toroidally between the pair of bead portions 4. The adhesive rubber layer 12 increases the adhesive strength between the carcass ply 6A and the inner liner layer 10 to suppress peeling thereof. The adhesive rubber layer 12 is preferably composed of, for example, an elastomer composition containing natural rubber or styrene-butadiene rubber. In the present embodiment, a layer having a well-known configuration is used as the adhesive rubber layer 12.

As shown in FIG. 1 and FIG. 3, each bead apex rubber 8 of the present embodiment is formed from a hard rubber extending outward in the tire radial direction so as to be inclined from the inner side to the outer side in the tire axial direction and having a tapered cross-sectional shape. The outer end 8e of the bead apex rubber 8 is located inward of the tire maximum width position M in the tire radial direction. The bead apex rubber 8 is formed, for example, by a hard rubber having a rubber hardness of 50 degrees or more and even 60 degrees or more. The rubber hardness is a durometer A hardness measured in an environment of 23°C using a type A durometer in accordance with JIS-K6253. In addition, a complex elastic modulus E* of the bead apex rubber 8 is preferably 2 to 40 MPa and more preferably 10 to 30 MPa. Furthermore, the bead apex rubber 8 preferably has a loss tangent tanδ of 0.08 to 0.15. The complex elastic modulus E* and the loss tangent tanδ are values measured under the following conditions in accordance with JIS-K6394 and are measured using a test piece taken from the bead apex rubber 8.
Initial strain: 10%
Amplitude: ±2%
Frequency: 10 Hz
Deformation mode: tensile
Measurement temperature: 70°C
Viscoelasticity spectrometer: manufactured by Iwamoto Seisakusho

The test piece: 20 mm in length × 4 mm in width × 1 mm in thickness (the tire circumferential direction is set as the length direction of the test piece, and the tire axial direction is set as the thickness direction of the test piece)

Each bead core 5 has, for example, a polygonal cross-sectional shape in which a bead wire (not shown) is wound in multiple rows and multiple stages. The bead core 5 of the present embodiment has a substantially quadrangular cross-sectional shape. The bead core 5 has the outer surface 5a adjacent to the bead apex rubber 8, an inner surface 5b opposite to the outer surface 5a and facing the inner side in the tire radial direction, and a pair of side surfaces 5c connecting the outer surface 5a and the inner surface 5b. A wire having a well-known configuration is used as the bead wire, and the bead wire is made of steel, for example.

In order to enhance the reading performance of the electronic component 21, in each of the case where the height Ha of the bead apex rubber 8 is less than 25 mm (mode of FIG. 3) and the case where the height Ha of the bead apex rubber 8 is 25 mm or more (mode of FIG. 1), the electronic component 21 is placed at a position that is away from the outer surface 5a of the bead core 5 to the outer side in the tire radial direction by preferably 10 mm or more and more preferably 12 mm or more. In addition, the electronic component 21 is preferably placed in a region A3 between the tire maximum width position M and a position that is away from the outer surface 5a to the outer side in the tire radial direction by 5 mm or more. Placing the electronic component 21 in the regions A1 to A3 means that the entirety of a body portion 21a described later is placed in the regions A1 to A3 and preferably means that the entirety of the electronic component 21 is placed in the regions A1 to A3. Also, placing the electronic component 21 in the regions A1 to A3 further preferably means that the entirety of the electronic module 20 is placed in the regions A1 to A3.

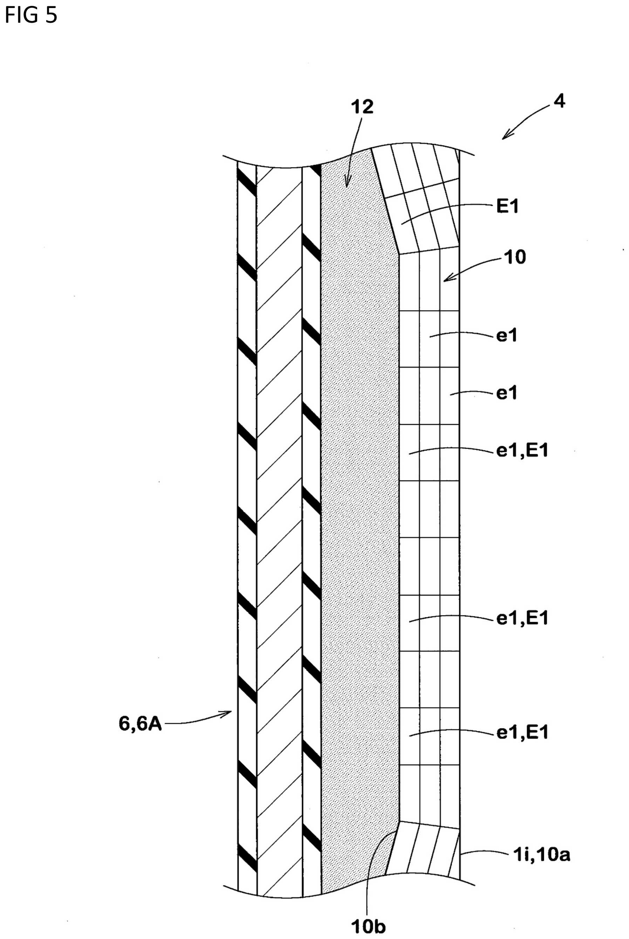

Moreover, the electronic component 21 is further preferably located in a low-strain region (not shown) where the sum of strains is 60% or less of the maximum value of the sum of strains. Accordingly, the durability of the tire 1 and the electronic component 21 is further improved. The "strain" is numerical data outputted in a result (e.g., the finite element method) of performing a simulation of a tire (rolling simulation in which at least one rotation of a tire model is made) using the computer described in Patent No. 4608306 (hereinafter referred to as "patent publication"). The "strains" are outputted from a plurality of "first elements e1" (shown in FIG. 5) described in the above patent publication, for example. Also, the "sum of strains" is the sum of six component strains composed of vertical strains in the tire meridian direction, the tire circumferential direction, and the tire thickness direction, a shear strain causing shear deformation in the tire meridian direction, a shear strain causing shear deformation in the tire circumferential direction, and a shear strain causing shear deformation in the tire thickness direction, which is described in the above patent publication.

The first elements e1 are assigned, for example, to the clinch rubber 4G, the sidewall rubber 3G, the adhesive rubber layer 12, the bead apex rubber 8, and/or the inner liner layer 10 (shown in FIG. 1). FIG. 5 is an enlarged cross-sectional view of the bead portion 4 showing the first elements e1 of the present embodiment. As shown in FIG. 5, the plurality of first elements e1 are assigned to the inner liner layer 10 in the present embodiment. The first elements e1 of the present embodiment are assigned to first elements E1 constituting the outwardly facing surface 10b of the inner liner layer 10. The first elements E1 are continuously arranged, for example, over the inner and outer sides in the tire radial direction of the inner liner layer 10. In the present embodiment, the first elements E1 are assigned between the height position in the tire radial direction of the outer surface 5a of the bead core 5 and the height position in the tire radial direction of the outer end 6e in the tire radial direction (shown in FIG. 1) of the turned-up portion 6b of the carcass ply 6A. The first elements e1 may be assigned to the adhesive rubber layer 12 adjacent to the outwardly facing surface 10b.

Moreover, as the "boundary conditions" described in the above patent publication, for example, the tire 1 in the standardized state in which a standardized load is applied thereto, a rotation speed based on the maximum speed assumed for the tire 1, the friction coefficient of a road surface on which running of the tire 1 is assumed, etc., are adopted. The low-strain region is further preferably a region where the sum of strains is 50% or less of the maximum value of the sum of strains. As shown in FIG. 5, calculation for the low-strain region is performed in a state where the electronic component 21 is not provided in the tire 1.

The "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The electronic component 21 is placed between the carcass 6 and the inner liner layer 10. In the present embodiment, one electronic component 21 is placed in one of the pair of bead portions 4 (on the left side in FIG. 1). The placement position of the electronic component 21 is not limited to such a position, and the electronic component 21 may be provided in each of the bead portions 4 on both sides. In addition, a plurality of electronic components 21 may be provided on the tire circumference.

As shown in FIG. 4, the electronic component 21 is placed between the inner liner layer 10 and the adhesive rubber layer 12 such that the electronic component 21 is not in contact with the topping rubber layer 16. Accordingly, the tire 1 of the present embodiment can suppress damage due to contact between the electronic component 21 and the carcass cord 15 even when repeated deformation during running occurs.

The electronic component 21 is composed of, for example, any of an RFID tag, a pressure sensor, a temperature sensor, an acceleration sensor, and a magnetic sensor. The electronic component 21 of the present embodiment is an RFID tag. Upon receiving interrogation radio waves, the RFID tag uses the radio waves as electrical energy and transmits various data in a memory as response radio waves. For such an RFID tag, a known configuration is adopted.

As shown in FIG. 2, the electronic component 21 of the present embodiment includes the body portion 21a having an IC chip, and an antenna 21b extending in a coil shape. The IC chip is composed of, for example, a transmitter/receiver circuit, a control circuit, a memory, etc. In the present embodiment, the antenna 21b includes a coil portion 24a obtained by helically winding an element wire made of a metal, and a coil inner space 24b in which a coil central axis K1 of the coil portion 24a is placed.

In the electronic component 21 of the present embodiment, the antenna 21b and the body portion 21a are not directly connected to each other, and the body portion 21a is placed in the coil inner space 24b of the antenna 21b. Accordingly, the body portion 21a is protected by the antenna 21b, and thus the durability of the electronic component 21 is further improved. The body portion 21a is, for example, held in contact with the outer surface of the element wire of the coil portion 24a. A helical outer diameter d1 (shown in FIG. 4) of the antenna 21b is, for example, 1.5 to 2.5 mm and preferably 1.8 to 2.0 mm. The overall length of the electronic component 21 (which is the overall length including the antenna 21b) is, for example, about 35 to 50 mm.

As the cover rubber 22, a known rubber having excellent adhesiveness is used as appropriate. As the cover rubber 22, the same rubber as the topping rubber layer 16 (shown in FIG. 2) of the carcass ply 6A may be used.

The cover rubber 22 has an overall length larger than the overall length of the electronic component 21 such that the cover rubber 22 can completely cover the electronic component 21. The cover rubber 22 is formed, for example, in a rectangular parallelepiped shape. A length La of the cover rubber 22 is a length in the length direction of the antenna 21b (direction of the coil central axis K1) and is 45 to 70 mm, for example. A width Lb of the cover rubber 22 is a length in a direction orthogonal to the length direction of the antenna 21b, is smaller than the length La, and is 8 to 15 mm, for example. A thickness ta is a thickness in a direction orthogonal to the length La and the width Lb, is smaller than the length La and the width Lb, and is, for example, is 2.0 to 3.0 mm and preferably 2.2 to 2.4 mm.

The cover rubber 22 of the present embodiment includes an outer layer 26 in contact with the adhesive rubber layer 12 (shown in FIG. 4) and an inner layer 27 in contact with the inner liner layer 10 (shown in FIG. 4). In addition, in the present embodiment, the electronic component 21 is placed between the outer layer 26 and the inner layer 27 of the cover rubber 22. A thickness t1 of the inner layer 27 and a thickness t2 of the outer layer 26 are each preferably 0.8 to 1.5 mm and more preferably 1.0 to 1.3 mm. Accordingly, the durability is further improved.

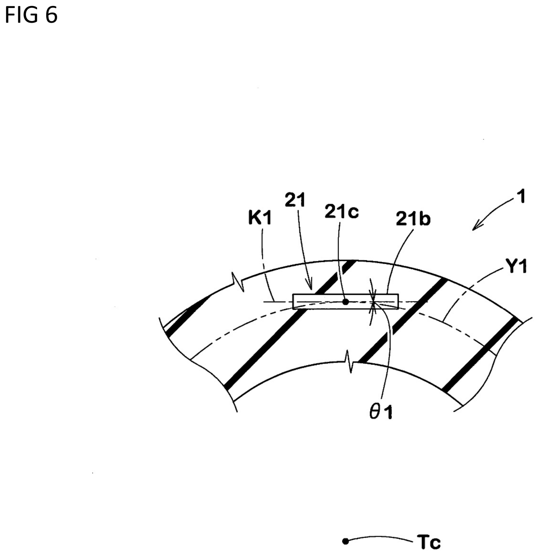

FIG. 6 is a cross-sectional view of the tire 1 obtained by cutting the tire 1 parallel to the tire equator C (shown in FIG. 1) at the placement position of the electronic component 21. As shown in FIG. 6, when viewed in the direction of the tire rotation axis Tc, the electronic component 21 is placed such that the coil central axis K1 of the antenna 21b makes an angle θ1 within 45 degrees with respect to the tire circumferential direction. Accordingly, a load generated in the electronic component 21 during running is alleviated, and thus the durability of the electronic component 21 and the tire 1 (carcass cords 15) is improved. The angle θ1 is an angle between the coil central axis K1 and a tangent line (not shown) of a line Y1 extending in the tire circumferential direction and passing through a midpoint 21c in the length direction of the antenna 21b. The angle θ1 is preferably within 25 degrees and is 0 degrees in the present embodiment.

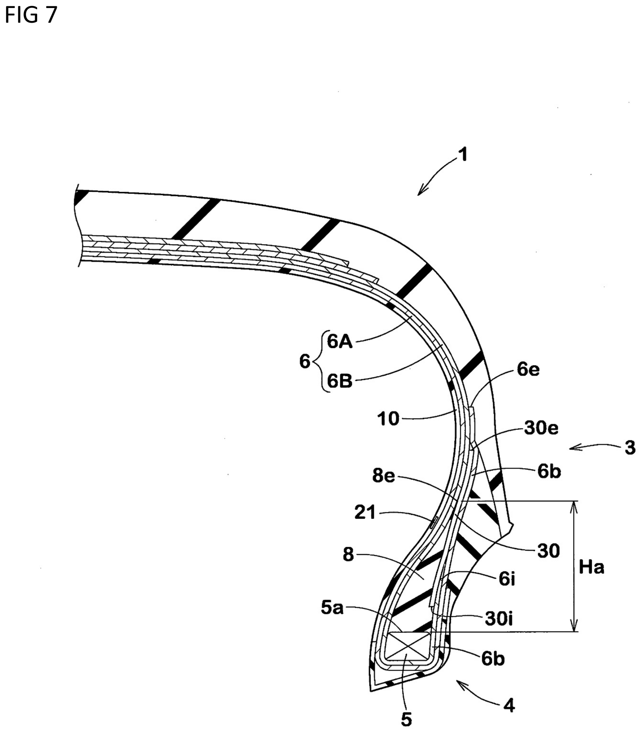

FIG. 7 is a tire meridional cross-sectional view of a right half of a tire 1 of another embodiment. As shown in FIG. 7, the tire 1 of this embodiment includes a carcass 6 and a reinforcing rubber layer 30. The carcass 6 is composed of, for example, two carcass plies 6A and 6B placed on the inner and outer sides in the tire radial direction. In this embodiment, the outer end 6e in the tire radial direction of the turned-up portion 6b of the inner carcass ply 6A is located outward of an outer end 6i in the tire radial direction of the turned-up portion 6b of the outer carcass ply 6B in the tire radial direction. The height Ha of the bead apex rubber 8 of this embodiment is 25 mm or more.

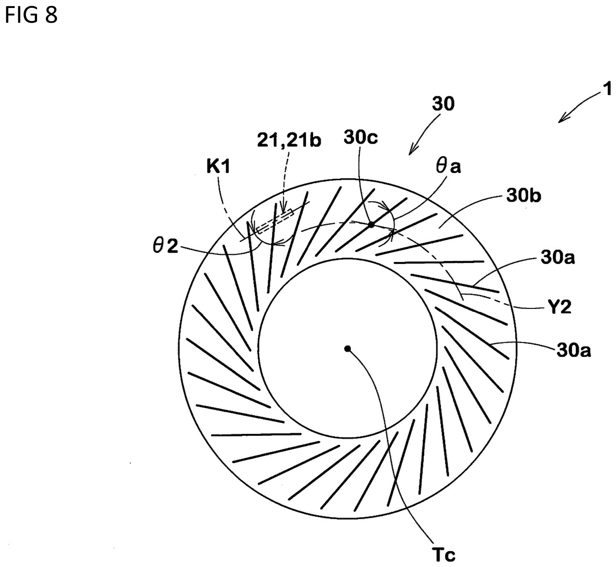

The reinforcing rubber layer 30 is located, for example, between the bead apex rubber 8 and the turned-up portion 6b of the outer carcass ply 6B. In this embodiment, the reinforcing rubber layer 30 extends on the inner and outer sides in the tire radial direction of the outer end 8e in the tire radial direction of the bead apex rubber 8. An outer end 30e in the tire radial direction of the reinforcing rubber layer 30 is located inward of the outer end 6e of the turned-up portion 6b of the inner carcass ply 6A in the tire radial direction. An inner end 30i in the tire radial direction of the reinforcing rubber layer 30 is located inward of the outer end 6i of the turned-up portion 6b of the outer carcass ply 6B in the tire radial direction and is located outward of the outer surface 5a of the bead core 5 in the tire radial direction. In this embodiment, the reinforcing rubber layer 30 is placed, for example, in each of the sidewall portions 3 on both sides (in FIG. 7, only one is shown). The reinforcing rubber layer 30 includes a plurality of reinforcing cords 30a (shown in FIG. 8) and a topping rubber 30b covering these reinforcing cords 30a. Such a reinforcing rubber layer 30 enhances the stiffness of the sidewall portion 3 or the bead portion 4 to improve the durability of the tire 1. In this embodiment, each reinforcing cord 30a is formed from a metal, e.g., steel.

FIG. 8 is a front view of the reinforcing rubber layer 30 formed in the tire 1, as seen in the direction of the tire rotation axis Tc. As shown in FIG. 8, the reinforcing cords 30a are preferably arranged so as not to be parallel to the coil central axis K1 of the antenna 21b. Accordingly, radio interference and the like generated in the electronic component 21 can be suppressed. In order to maintain high communication performance, an angle θ2 between the reinforcing cord 30a and the coil central axis K1 is preferably 40 degrees or more and further preferably 65 degrees or more and is preferably 140 degrees or less and further preferably 115 degrees or less. An angle θa of the reinforcing cord 30a with respect to the tire circumferential direction is set to 19 to 26 degrees in this embodiment. The angle θa is an angle with respect to a tangent line (not shown) of a line Y2 extending in the tire circumferential direction, at a midpoint 30c in the length direction of the reinforcing cord 30a. In addition, the angle θ2 is an angle between the coil central axis K1 and the reinforcing cord 30a most adjacent to the midpoint 21c (shown in FIG. 5) in the length direction of the antenna 21b.

Although some embodiments of the present invention have been described in detail above, the present invention is not limited to the above specific embodiments, and various modifications can be made to implement the present invention.

### EXAMPLES

Tires (tires A) for a passenger car having the basic structure in FIG. 1 and having a size of 285/65R17 116H and tires (tires B) for a passenger car having the basic structure in FIG. 3 and having a size of 225/30ZR20 85Y XL were produced as test tires based on the specifications in Table 1. Each test tire includes an electronic module as shown in FIG. 2. Each test tire was tested for communication performance and durability. Common specifications and test methods for the tires are as follows.
Tire A
   Rim: 17×8.5 J
   Tire pressure: 250 kPa
   Ha: 40 mm
Tire B
   Rim: 20×8.0 J
   Tire internal pressure: 290 kPa
   Ha: 15 mm

### <Communication Performance>

The RFID tag in each test tire was read using an RFID reader and an antenna for RFID readers in accordance with the conformance test methods for RFID enabled tyres of ISO 20912: 2020, and the communication performance was indicated as indexes with a reference received signal strength indicator (RSSI: the magnitude of the amplitude of radio waves) regarded as 100. A higher test result value indicates that the radio waves are stronger and the communication performance is better. Specifically, a test result value of "30" or more means that the communication is sufficient and is acceptable. In addition, a test result value of less than "30" means that the communication is insufficient and is unacceptable.
RFID reader: manufactured by IMPINJ (model: SPEEDWAY R420)
Antenna for RFID readers: manufactured by MASPRO DENKOH CORP. (model: RAF2031)

### <Durability>

Each test tire was run on a drum tester with the following specifications. Then, each test tire was dismantled to check the degree of damage of the carcass cords around the electronic component and the degree of the electronic component. The degree of damage was evaluated by the following three criteria A to C.
A: State where there is no damage or there is slight damage and there is no adverse effect on the life of the tire and operation of the electronic component even if the use of the tire is continued.
B: State where damage is greater than that in A but there is no problem in the practical use of the tire and the electronic component.
C: State where damage is greater than that in B and improvement is desired.
   Tire A
      Vertical load: 14.35 kN
   Tire B
      Vertical load: 6.14 kN
   Speed: 120 km/h (for both tires A and B)
   Running distance: 20000 km (for both tires A and B)

In Comparative Examples 1 and 2, it is meant that the electronic component is located outside the region A2, and in Comparative Example 3 and Examples 1 to 3, it is meant that the electronic component is located within the region A2. In addition, in Comparative Examples 4 and 5, it is meant that the electronic component is located outside the region A1, and in Examples 4 to 6, it is meant that the electronic component is located within the region A1.

The test results are shown in Table 1.

**[Table 1]**

| | Comp. Ex. 1 | Comp. Ex. 2 | Ex. 1 | Ex. 2 | Ex. 3 | Comp. Ex. 4 | Comp. Ex. 5 | Ex. 4 | Ex. 5 | Ex. 6 |
|---|---|---|---|---|---|---|---|---|---|---|
| Tire type | A | A | A | A | A | B | B | B | B | B |
| Ha (mm) | 40 | 40 | 40 | 40 | 40 | 15 | 15 | 15 | 15 | 15 |
| Position of electronic component | 2 | 42 | 5 | 25 | 40 | 2 | 27 | 15 | 5 | 25 |
| Electrical resistivity (Ω·cm) | 1.0×10¹⁰ | 1.0×10¹⁰ | 1.0×10¹⁰ | 1.0×10¹⁰ | 1.0×10¹⁰ | 1.0×10¹⁰ | 1.0×10¹⁰ | 1.0×10¹⁰ | 1.0×10¹⁰ | 1.0×10¹⁰ |
| Communication performance [index: higher value is better] | 5 | 100 | 30 | 95 | 100 | 5 | 95 | 90 | 30 | 95 |
| Durability (tire) [A to C] | A | C | A | A | B | A | C | B | A | B |
| Durability (electronic component) [A to C] | A | C | A | A | B | A | C | B | A | B |

As shown in Table 1, it can be understood that the tire of each Example has better durability of the tire (carcass cords) and the electronic component compared to the tire of each Comparative Example. In addition, the tire of each Example has excellent communication performance.

## Claims

1. A pneumatic tire (1) comprising:
a pair of bead portions (4); and
at least one electronic component (21), wherein
the electronic component (21) is covered with a cover rubber (22) having an electrical resistivity of 1.0×10¹⁰ Ω·cm or more,
each of the pair of bead portions (4) is provided with a bead core (5) and a bead apex rubber (8) extending outward in a tire radial direction from an outer surface (5a) in the tire radial direction of the bead core (5),
when a height (Ha) of the bead apex rubber (8) in the tire radial direction from the outer surface (5a) of the bead core (5) is less than 25 mm, the electronic component (21) is placed in a region (A1) between 5 mm or more and 25 mm or less from the outer surface (5a) of the bead core (5) to an outer side in the tire radial direction, and
when the height (Ha) of the bead apex rubber (8) is 25 mm or more, the electronic component (21) is placed in a region (A2) between 5 mm or more from the outer surface (5a) of the bead core (5) to the outer side in the tire radial direction and an outer end (8e) in the tire radial direction of the bead apex rubber (8) or therebelow.

2. The pneumatic tire (1) according to claim 1, wherein the electronic component (21) is located in a low-strain region, of the region (A1, A2), where a sum of strains is 60% or less of a maximum value of the sum of strains.

3. The pneumatic tire (1) according to claim 1 or 2, further comprising:
a toroidal carcass (6) extending between the bead cores (5) of the pair of bead portions (4); and
a toroidal inner liner layer (10) extending between the pair of bead portions (4) on an inner side of the carcass (6), wherein
the electronic component (21) is placed between the carcass (6) and the inner liner layer (10).

4. The pneumatic tire (1) according to claim 3, wherein the inner liner layer (10) contains 80% by mass or more of a butyl-based rubber.

5. The pneumatic tire (1) according to any one of claims 1 to 4, wherein
the electronic component (21) includes a body portion (21a) having an IC chip, and an antenna (21b) extending in a coil shape,
the antenna (21b) and the body portion (21a) are not directly connected to each other, and
the body portion (21a) is placed in a coil inner space (24b) of the antenna (21b).

6. The pneumatic tire (1) according to claim 5, wherein, when viewed in a direction of a tire rotation axis (Tc), the electronic component (21) is placed such that a coil central axis of the antenna (21b) makes an angle within 45 degrees with respect to a tire circumferential direction.
